Europäisches Patentamt

(19) European Patent Office

Office européen des brevets

(11) Publication number: **0 230 765 B1**

(12) # EUROPEAN PATENT SPECIFICATION

(45) Date of publication of patent specification:
20.03.91 Bulletin 91/12

(51) Int. Cl.⁵: **B60C 11/11, B60C 11/12**

(21) Application number: 86309944.6

(22) Date of filing: 19.12.86

(54) Block pattern tyre.

(30) Priority: 27.12.85 JP 2986/86

(43) Date of publication of application:
05.08.87 Bulletin 87/32

(45) Publication of the grant of the patent:
20.03.91 Bulletin 91/12

(84) Designated Contracting States:
DE FR GB

(56) References cited:
EP-A- 0 082 293
DE-A- 1 605 638
FR-A- 2 061 435
FR-A- 2 076 641
FR-A- 2 526 722

(56) References cited:
FR-A- 2 548 596
GB-A- 2 003 804
GB-A- 2 008 043
US-A- 4 296 789

(73) Proprietor: SUMITOMO RUBBER INDUSTRIES LIMITED
No. 1-1, Tsutsui-cho 1-chome
Chuo-ku Kobe-shi Hyogo 651 (JP)

(72) Inventor: Iuchi, Munenori
3 Chome 1 banchi minatojima nakamachi Chou-ku
Kobe-shi Hyogo-ken (JP)

(74) Representative: Stewart, Charles Geoffrey
SP TYRES UK LIMITED Tyre Technical Division
Fort Dunlop Birmingham B24 9QT (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a block pattern tyre and in particular to an all-weather steel radial tyre for truck and bus.

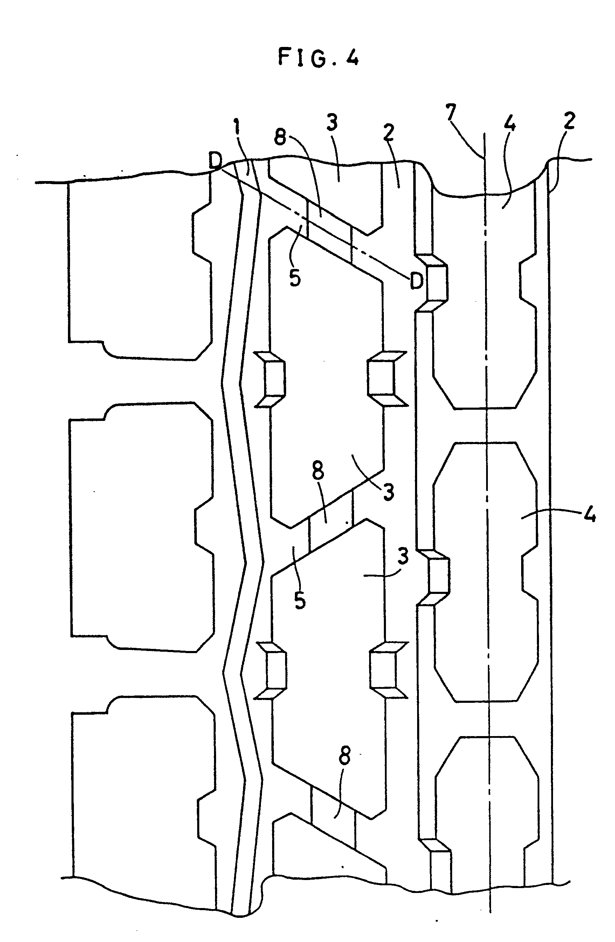

Usually, all-weather tyres, particularly steel radial tyres for truck and bus are required to have good on-the-snow performance, wet grip performance, resistance to uneven wear, and long life. For good on-the-snow performance and long life, such tyres are usually provided with a tread pattern which turns from a block pattern when the tyre is new into a rib pattern formed by the blocks being connected to one another after the intermediate stage of wear. Such a conventional tread pattern is shown in Fig.4 and 5 and comprises two circumferential grooves 1 and 2, blocks 3 and 4 formed between the circumferential grooves 1 and 2 ; and lateral grooves 5 formed between the blocks 3 and 4. The blocks 3 each have a low rib part 8 having a depth about one half that of the main groove depth in the middle portion of the lateral groove 5. Thus, when this conventional tyre is new, the tyre functions as a block pattern tyre which has separate blocks 3 and when the tyre has worn by more than its tread depth low rib parts 8 become flush with the tread surface and the blocks 3 are connected with each other. Accordingly, the tyre then becomes substantially a rib pattern tyre.

Such a tyre has a longer life than an ordinary block pattern tyre because uneven wear among the blocks is prevented by the low rib parts 8 in the lateral grooves 5 which increase the stiffness of the blocks in the circumferential direction. However, these tyres are poor in on-the-snow performance and rapidly also turn poor in wet grip performance when worn by more than half of tread depth because of the low rib parts 8.

A tyre according to the preamble of claim 1 is known, eg. from GB-A-2008043.

It is an object of the present invention to provide a block pattern tyre tread which turns into a rib pattern without sacrificing on the snow performance or wet grip performance.

Accordingly the invention provides a block pattern tyre having a tread provided with circumferential grooves, lateral grooves extending between the circumferential grooves to form tread blocks and a narrow groove disposed in each lateral groove wherein each narrow groove has a substantially constant depth similar to the depth of the circumferential groves and each narrow groove extends between the circumferential grooves and across a protruding portion of the groove bottom through the lateral grooves and each narrow groove has a width such that the narrow groove closes in the ground contacting patch in use of the vehicle characterised in that said protruding portion is a middle portion and the lateral groove decreases in depth towards said middle portion of the lateral groove from each circumferential groove such that the lateral groove in said middle portion has no depth such that its bottom is flush with the tread surface of the tread blocks.

The present invention will be apparent from the following example, by way of example only, in conjunction with the attached drawings in which :

Fig. 1. is a partial developed view of the tread pattern of one embodiment of this invention.

Fig. 2. is a sectional view taken along the line B-B in Fig. 1.

Fig. 3. is a sectional view taken along the line C-C in Fig. 1.

Fig. 4. is a partial developed view of the tread pattern of a conventional tyre and

Fig. 5. is a sectional view taken along the line D-D in Fig. 4.

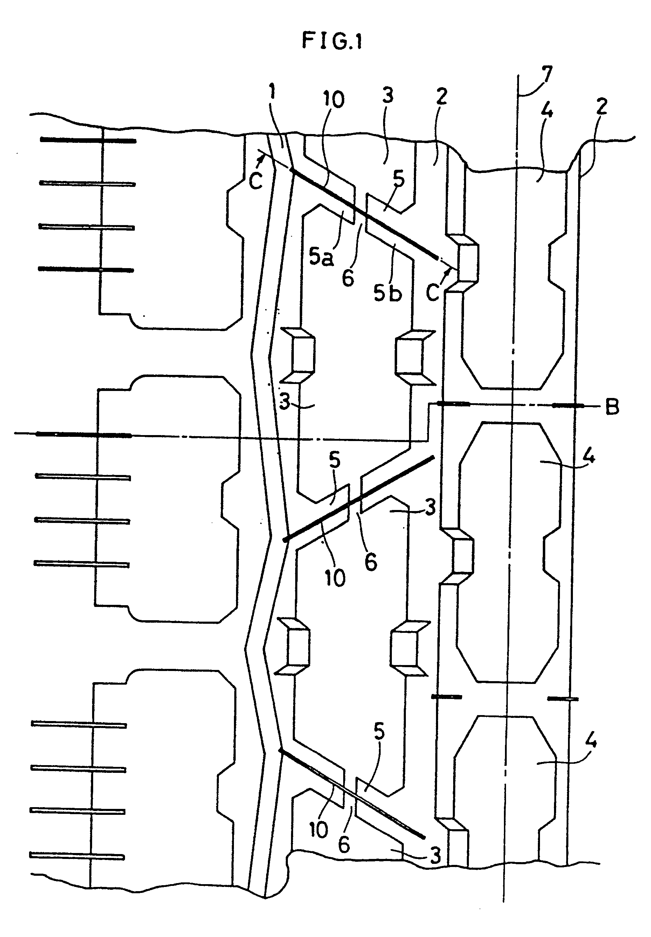

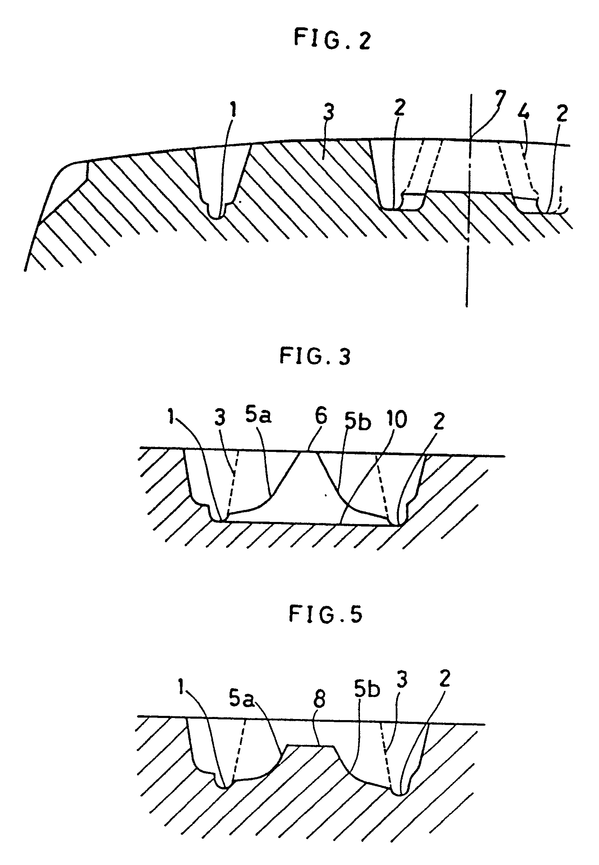

In Figs. 1 to 3, the block pattern tyre is for a 10.00R20 tyre and comprises four straight circumferential grooves 1 and 2 which divide the tread into five ribs ; a centre rib along the tyre equator 7, a pair of shoulder ribs and a pair of middle ribs between the centre rib and shoulder rib.

The circumferential groove 1 has a zig-zag groove bottom which is narrower than the groove width at the top to provide steps in the sidewalls of the circumferential groove 1.

Lateral grooves 5 extend between the circumferential grooves 1 and 2 to divide each middle rib into a plurality of blocks 3, and in addition other lateral grooves extend across the centre rib and shoulder ribs to divide them into a plurality of blocks 4.

The depth of each lateral groove 5 decreases towards the middle portion thereof from each circumferential groove 1 and 2 so that the bottom of the lateral groove 5 is flush with the tread surface of the blocks 3 in the middle portion of the lateral groove 5. Thus the lateral grooves 5 comprise two grooves 5a and 5b interrupted by a protrusion 6 in the middle of each lateral groove 5. Each end of the lateral grooves 5a and 5b is connected to the circumferential groove 1 or 2, respectively.

A narrow slit or groove 10 extends between the adjacent circumferential grooves 1 and 2 across the protrusion 6 through the grooves 5a and 5b.

The depth of the narrow groove 10 is the same as the circumferential grooves. The width of the narrow grooves 10 is about 0.7 mm so that the narrow grooves close completely when the tread contacts the ground. In use of the tyre the tread thus substantially turns from a block pattern into a rib pattern as it wears, but with the addition of the narrow grooves. The tyre has the original on-the-snow performance of the block pattern tyre when new, but owing to the narrow grooves, the tyre still has good wet grip performance when it is used as worn. In addition, the tyre does not suffer from uneven wear although it is effectively a block pattern tyre.

The narrow grooves (10) may be of any width which ensures that the grooves close in the contact patch and a width of 1 mm of less is prefered. This narrow width provides complete groove closure which provides low stiffness of the blocks throughout the life of the tyre and thus gives good on snow grip, the narrow grooves also provide effective drainage even when part worn but cause no uneven wear because when closed the tyre pattern acts as a rib type of tread.

The middle portion of the lateral grooves is flush with the unworn tread surface of the tread blocks.

The narrow groove has a width of not more than 1 mm to ensure complete closure in the contact patch and a prefered groove width is 0.7 mm.

## Claims

1. A block pattern tyre having a tread provided with circumferential grooves (1, 2), lateral grooves (5) extending between the circumferential grooves (1, 2) to form tread blocks (3) and a narrow groove (10) disposed in each lateral groove (5) wherein each narrow groove (10) has a substantially constant depth similar to the depth of the circumferential grooves (1, 2) and each narrow groove (10) extends between the circumferential grooves (1, 2) across a protruding portion (6) and the groove bottom through the lateral groove (5) and each narrow groove (10) has a width such that the narrow groove (10) closes in the ground contacting patch in use of the vehicle characterised in that said protruding portion is a middle portion (6) and the lateral groove (5) decreases in depth towards said middle portion (6) of the lateral groove (5) from each circumferential groove (1, 2) such that the lateral groove (5) in said middle portion (6) has no depth such that its bottom is flush with the tread surface of the tread blocks (3).

2. A block pattern tyre according to claim 1 characterised in that the middle portion (6) is substantially narrower than the width of the lateral groove (5).

## Ansprüche

1. Blockmusterreifen mit einer Lauffläche, die mit Umfangsnuten (1, 2), sich zwischen den Umfangsnuten (1, 2) erstrekkenden Quernuten (5) zur Bildung von Laufstreifenblöcken (3) und einer engen Nut (10) in jeder Quernut (5) versehen ist, wobei jede enge Nut (10) eine im wesentlichen konstante Tiefe gleichartig der Tiefe der Umfangsnuten (1, 2) besitzt und jede enge Nut (10) sich zwischen den Umfangsnuten (1, 2) über einen vorstehenden Abschnitt (6) des Nutbodens durch die Quernut (5) erstreckt, und jede enge Nut (10) eine solche Breite besitzt, daß die enge Nut (10) sich bei Verwendung des Fahrzeuges im Bodenaufstandsfleck schließt, dadurch gekennzeichnet, daß der vorstehende Abschnitt ein Mittelabschnitt (6) ist und daß die Tiefe der Quernut (5) sich zu dem Mittelabschnitt (6) der Quernut (5) von jeder Umfangsnut (1, 2) her so verringert, daß die Quernut (5) in dem Mittelabschnitt (6) keine Tiefe mehr hat, so daß ihr Boden mit der Lauffläche der Laufflächenblöcke (3) bündig ist.

2. Blockmusterreifen nach Anspruch 1, dadurch gekennzeichnet, daß der Mittelabschnitt (6) wesentlich enger als die Breite der Quernut (5) ist.

## Revendications

1. Pneumatique à sculpture à blocs ayant une bande de roulement qui a des gorges circonférentielles (1, 2), des gorges latérales (5) placées entre les gorges circonférentielles (1, 2) afin que les blocs (3) soient formés, et une gorge étroite (10) placée dans chaque gorge latérale (5), chaque gorge étroite (10) ayant une profondeur pratiquement constante analogue à la profondeur des gorges circonférentielles (1, 2), chaque gorge étroite (10) étant disposée entre les gorges circonférentielles (1, 2) et dans une partie en saillie (6) du fond de la gorge formée dans la gorge latérale (5), chaque gorge étroite (10) ayant une largeur telle que la gorge étroite (10) se referme au contact du sol lors de l'utilisation du véhicule, caractérisé en ce que la partie en saillie est une partie médiane (6) et la gorge latérale (5) a une profondeur qui diminue vers la partie médiane (6) de la gorge latérale (5) à partir de chaque gorge circonférentielle (1, 2), si bien que la gorge latérale (5), dans la partie médiane (6), a une profondeur nulle telle que son fond se trouve au niveau de la surface des blocs (3) de la bande de roulement.

2. Pneumatique à sculpture à blocs selon la revendication 1, caractérisé en ce que la partie médiane (6) a une largeur nettement inférieure à celle de la gorge latérale (5).

# FIG.1

## FIG. 2

## FIG. 3

## FIG. 5

FIG. 4